# DEMANDE DE BREVET EUROPEEN

(11) **EP 2 589 507 A1**
(43) Date de publication de la demande: **08.05.2013**
(21) Numéro de dépôt: 11188033.2
(22) Date de dépôt: 07.11.2011
(51) Int. Cl.: B60K 15/03, G01F 17/00, G01F 23/00, G01F 25/00

(54) **Méthode de jaugeage pour un réservoir à carburant de véhicule hybride en matière plastique**

(71) Demandeur: Inergy Automotive Systems Research (Société Anonyme), 1120 Bruxelles (BE)
(72) Inventeur: Criel, Bjorn, 1750 SINT-MARTENS-LENNIK (BE); Cuvelier, Vincent, 1020 BRUSSELS (BE)
(74) Mandataire: de la Bigne, Guillaume Michel Marie

(57) **Abrégé**

Méthode de jaugeage pour un réservoir à carburant de véhicule hybride en matière plastique équipé d'une jauge permettant de mesurer le volume de carburant présent dans le réservoir, selon laquelle on estime la déformation du réservoir à l'aide d'au moins un capteur et on corrige le volume mesuré par la jauge en fonction de cette déformation.

## Description

La présente invention concerne une méthode de jaugeage pour un réservoir à carburant de véhicule hybride.

On parle généralement de véhicule hybride dans le cas d'un véhicule associant l'utilisation d'un moteur thermique et d'un moteur électrique.

Il existe un principe général de fonctionnement pour les véhicules hybrides qui consiste à faire fonctionner soit le moteur électrique, soit le moteur thermique, soit les deux en même temps selon les modèles.

Un des principes particuliers est le suivant:
- lors des phases stationnaires (où le véhicule est immobile), les deux moteurs sont à l'arrêt;
- au démarrage, c'est le moteur électrique qui assure la mise en mouvement de la voiture, jusqu'à des vitesses plus élevées (25 ou 30 km/h);
- lorsque des vitesses plus élevées sont atteintes, le moteur thermique prend le relais;
- en cas de grande accélération, on observe la mise en marche des deux moteurs à la fois, qui permet d'avoir des accélérations équivalentes au moteur de même puissance, voire supérieures;
- en phase de décélération et de freinage, l'énergie cinétique est utilisée pour recharger les batteries (à noter que cette fonctionnalité n'est pas disponible sur tous les moteurs hybrides disponibles sur le marché à l'heure actuelle).

Il résulte de ce principe que le moteur thermique ne fonctionne pas en permanence et que dès lors, les phases de purge du canister (filtre à charbon actif qui évite de relarguer à l'atmosphère, des vapeurs de carburant) ne peuvent pas être assurées normalement puisque lors de celles-ci, de l'air éventuellement préchauffé est mis à circuler dans le canister pour le régénérer (c.à.d. pour désorber les vapeurs de carburant qui y sont adsorbées), cet air étant ensuite admis dans le moteur pour y être brûlé.

Dès lors, pour éviter de charger le canister inutilement, on bloque généralement par défaut la communication entre le réservoir et celui-ci ; il en résulte que les réservoirs à carburant de ces véhicules sont généralement mis sous pression (typiquement, à une pression de l'ordre de 300 - 400 mbar), ce qui se fait généralement par un élément fonctionnel situé après les clapets de ventilation, souvent appelé FTIV (Fuel Tank Isolation Valve) et qui empêche la ventilation (dégazage) du réservoir en dehors des situations de remplissage. Cet élément comprend généralement deux soupapes de sécurité (calibrées aux pressions maximales inférieure et supérieure d'utilisation du réservoir) et un pilotage généralement électrique pour pouvoir mettre à pression atmosphérique le réservoir avant remplissage.

Par rapport à leurs homologues métalliques, les réservoirs (ou autres parties des systèmes à carburant) en matière plastique présentent un avantage certain en termes de poids et de facilité de mise en oeuvre. Ils présentent toutefois comme inconvénient, le fait que des déformations non négligeables parfois rémanentes peuvent y être induites suite à des augmentations/fluctuations de température et de pression, ainsi que suite au vieillissement desdits réservoirs. Ces déformations peuvent induire une erreur importante sur le volume de carburant estimé par les jauges classiques en fonction d'une mesure du niveau de carburant présent dans le réservoir.

Or, il est courant d'équiper les véhicules de capteurs de température, pression... notamment en vue de pouvoir effectuer des tests de détection de fuite (ou «OBD (On Board Diagnosis) leak tests»).

L'idée à la base de la présente invention est d'utiliser au moins un tel capteur en vue d'estimer la déformation du réservoir et de pouvoir corriger la valeur de jaugeage en conséquence.

La présente invention concerne dès lors une méthode de jaugeage pour un réservoir à carburant de véhicule hybride en matière plastique équipé d'une jauge permettant de mesurer le volume de carburant présent dans le réservoir, selon laquelle on estime la déformation du réservoir à l'aide d'au moins un capteur et on corrige le volume mesuré par la jauge en fonction de cette déformation.

Par «méthode de jaugeage», on entend désigner une méthode pour déterminer la quantité (volume) de carburant présent dans le réservoir. Pour ce faire, la méthode selon l'invention utilise une jauge qui génère de préférence un signal électrique. Cette jauge peut ou non impliquer une pièce mobile. Il peut s'agir d'une jauge avec bras et flotteur, d'une jauge capacitive...

Le carburant auquel est destinée l'invention peut être de l'essence, du diesel, un biocarburant...et peut avoir une teneur en alcool de 0 à 100%.

Le réservoir à carburant selon l'invention est en matière plastique c.à.d. qu'il comprend une enceinte en matière plastique définissant un volume de stockage. Cette enceinte est de préférence renforcée, par exemple par un renfort fibreux interne ou externe, par des soudures locales («kiss points»), par un élément renforçant rapporté (sorte de pilier) solidarisant ses parois inférieure et supérieure...

Les matières thermoplastiques donnent de bons résultats dans le cadre de l'invention, notamment en raison des avantages de poids, de résistance mécanique et chimique et de mise en oeuvre facilitée, en particulier lorsque les éléments du système présentent des formes complexes.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits supra.

Un polymère souvent employé pour les réservoirs à carburant est le polyéthylène. D'excellents résultats ont été obtenus avec du polyéthylène haute densité (PEHD).

De préférence, le réservoir auquel est destinée la méthode selon l'invention présente une structure multicouche comprenant au moins une couche de matière thermoplastique et au moins une couche supplémentaire qui peut, de manière avantageuse, être constituée d'un matériau barrière aux liquides et/ou aux gaz.

La présente invention s'applique bien dans le cas de réservoirs à carburant en PEHD ayant une couche barrière en EVOH.

La méthode selon l'invention utilise au moins un capteur pour estimer la déformation du réservoir. De préférence, il s'agit d'un capteur dont la mesure (pression, température, durée écoulée depuis un moment donné...) est utilisée sur le véhicule pour une autre fonction que le jaugeage, par exemple pour tester le système à carburant. De manière préférée, la méthode selon l'invention utilise un capteur de pression et/ou un capteur de température et/ou un compteur de durée de vie. De manière tout particulièrement préférée, la méthode selon l'invention utilise à la fois un capteur de pression, un capteur de température et un compteur de durée de vie.

Le ou les capteurs susmentionnés sont de préférence directement associés au réservoir c.à.d. que le capteur de pression, le cas échéant, mesure de préférence la pression dans le réservoir, qu'il en va de même pour le capteur de température, le cas échéant et que le compteur mesure de préférence la durée écoulée depuis le premier remplissage du réservoir.

L'estimation de la déformation du réservoir peut se faire sur base de mesures expérimentales et/ou de simulations numériques. Elle peut impliquer le recours à des tables de calibrage, où des valeurs de déformation sont listées en fonction du ou des paramètres mesuré(s), ou à des courbes ou des formules de calibrage permettant de lire ou de calculer la valeur de la déformation en fonction de ce(s) paramètre(s). A noter que ces tables/courbes/formules dépendent généralement d'autres facteurs tels que la forme du réservoir, la position de la jauge etc.

La méthode selon l'invention est généralement appliquée au système à carburant par un processeur qui peut être intégré à l'ordinateur de bord du véhicule (parfois appelé ECU ou Engine Control Unit), ou par un processeur spécifique au système à carburant (parfois appelé FSCU ou Fuel System Control Unit). Selon cette variante de l'invention, les tables, courbes et/ou formules de calibrage précitées sont stockées dans une mémoire du processeur et au moins un logiciel approprié utilise celles-ci pour corriger la valeur lue par la jauge et calculer avec plus de précision le volume de carburant présent dans le réservoir.

Une architecture électronique privilégiée pourrait être de raccorder les capteurs présents dans le réservoir avec l'ordinateur de bord du véhicule au moyen d'un faisceau électrique. De plus, l'ordinateur de bord du véhicule peut être décomposé en plusieurs entités physiques distinctes (appelés calculateurs ou contrôleurs). Ces entités véhiculent alors de l'information entre elles au moyen de faisceaux électriques contenant des liaisons analogiques, numériques ou des bus de terrain multiplexés (selon les normes CAN, LIN, Flexray, etc.). Ainsi l'intégralité du calcul visant à améliorer la précision du jaugeage peut se trouver répartie sur plusieurs entités communiquant entre elles.

## Revendications

1. - Méthode de jaugeage pour un réservoir à carburant de véhicule hybride en matière plastique équipé d'une jauge permettant de mesurer le volume de carburant présent dans le réservoir, selon laquelle on estime la déformation du réservoir à l'aide d'au moins un capteur et on corrige le volume mesuré par la jauge en fonction de cette déformation.

2. - Méthode selon la revendication précédente, dans laquelle le réservoir est en PEHD ou polyéthylène haute densité et comprend une couche barrière en EVOH ou copolymère éthylène-alcool vinylique.

3. - Méthode selon l'une quelconque des revendications précédentes, dans laquelle la mesure du capteur est également utilisée sur le véhicule pour une autre fonction que le jaugeage, par exemple pour tester le système à carburant.

4. - Méthode selon l'une quelconque des revendications précédentes, utilisant un capteur de pression et/ou un capteur de température et/ou un compteur de durée de vie.

5. - Méthode selon la revendication précédente, utilisant à la fois un capteur de pression, un capteur de température et un compteur de durée de vie.

6. - Méthode selon l'une quelconque des revendications précédentes, dans laquelle le capteur est directement associé au réservoir à carburant.

7. - Méthode selon l'une quelconque des revendications précédentes, utilisant des tables et/ou des courbes et/ou des formules de calibrage obtenues par des mesures expérimentales et /ou des simulations numériques.

8. - Méthode selon la revendication précédente, ladite méthode étant appliquée au système à carburant par un processeur qui peut être intégré à un ordinateur de bord du véhicule (parfois appelé ECU ou Engine Control Unit), ou par un processeur spécifique au système à carburant (parfois appelé FSCU ou Fuel System Control Unit).

9. - Méthode selon la revendication précédente, dans laquelle les tables, courbes et/ou formules de calibrage sont stockées dans une mémoire du processeur et dans laquelle au moins un logiciel approprié utilise celles-ci pour corriger la valeur lue par la jauge et calculer le volume de carburant présent dans le réservoir.

10. - Méthode selon la revendication 8 ou 9, selon laquelle le réservoir comprend plusieurs capteurs et selon laquelle on raccorde ces capteurs avec l'ordinateur de bord du véhicule au moyen d'un faisceau électrique.

11. - Méthode selon la revendication précédente, dans laquelle l'ordinateur de bord du véhicule est décomposé en plusieurs entités physiques distinctes véhiculant de l'information entre elles au moyen de faisceaux électriques contenant des liaisons analogiques, numériques ou des bus de terrain multiplexés.
